# EUROPEAN PATENT SPECIFICATION

(11) **EP 0 197 496 B1**
(45) Date of publication and mention of the grant of the patent: **19.01.1994**
(21) Application number: 86104468.3
(22) Date of filing: 02.04.1986
(51) Int. Cl.: B29C 43/18, B29C 45/14, B29C 67/14, B29C 37/00

(54) **Molding with in-mold coating**
Formen und Beschichten in derselben Form
Moulage et revêtement dans le moule

(30) Priority: 02.04.1985 US 718913
(43) Date of publication of application: 15.10.1986
(73) Proprietor: THE SHERWIN-WILLIAMS COMPANY, Cleveland Ohio 44115-1075 (US)
(72) Inventor: Ongena, Robert Edmund, Romeo Michigan 48065 (US)
(74) Representative: Abitz, Walter, Dr.-Ing.

(56) References cited:
- DE-A- 2 444 267
- US-A- 4 076 788
- US-A- 4 082 486
- US-A- 4 367 192
- US-A- 4 438 062

## Description

### BACKGROUND OF THE INVENTION

### Description of Prior Art

Molding of thermosetting plastics has become widespread. Particularly in the automotive industry where weight is a significant factor, molding of plastic parts for interior parts and exterior panels has become common. As set forth in a brochure MD 79-012 of General Motors entitled "Molded Coating Process and Specifications," exterior class "A" panels are formed of a composite of specialty polyester resins, thickeners, thermoplastic copolymers, mineral fillers, fiber reinforcements, catalysts, arid release agents. These materials are commonly combined (with different variations) in a sheet form and are known as "SMC." In the known molding technique of Compression Molding, a piece of SMC of the appropriate size is placed in a mold made up of a fixed and movable die which define a mold cavity therebetween. The dies are nested in the sense that they have side or shear edges which closely interfit and act as a seal during molding.

The dies are forced closed by a press ram under high forces that cause pressures on the substrate up to about 103 bar (1500 psi). As a practical matter, the initial pressure must be high enough to form the substrate into the shape of the mold cavity. Depending on the size and shape of the part to be formed, different pressures are required. This molding process is commonly carried out at 149^{o}C (300^{o}F) but different temperatures may be used.

The molded products resulting from Compression Molding can have surface defects, such as surface pits, porosity, sink marks and shrink cracks. In order to cover these defects to produce a class "A" surface, a technique of in-mold coating has been developed. The process for molding and in-mold coating presently includes the following sequence:
(1) the mold is opened and an SMC charge is placed between the dies in the mold cavity;
(2) a press ram closes the mold under enough pressure to form or mold the substrate;
(3) level control cylinders try to maintain the dies in parallel condition while closing;
(4) after at least partial curing, the press ram releases the pressure;
(5) cylinders force the mold open;
(6) an injector shut-off pin for the coating opens;
(7) the metering pump(s) stroke, injecting the coating;
(8) the shut-off pin closes;
( 9) the press ram re-pressurizes;
(10) the level control cylinder readjusts to try to maintain parallelism while reclosing to allow the coating to spread evenly across the part surface;
(11) the coating is cured; and
(12) the press ram is released, the dies are separated, and the part is removed.

The opening and closing of the mold, the depressurizing and repressurizing, and their accompanying level adjustment are major time delays in the in-mold coating process. A typical example of this process is illustrated in FIGS. 4 and 5 of U.S. patent No. 4,076,788 to Edwin D. Ditto, which is incorporated herein by reference. It is estimated that this opening and closing of the molds take up 5 to 20 percent of the total molding and coating process time. When the millions and millions of parts that are molded yearly are considered, the inefficiency and cost of this opening-closing routine are staggering.

The reopening and reclosing of the mold cause other problems. Opening of the dies causes the flashing around the shear edges to enter the mold cavity. Disturbance of the shear edge may cause an incomplete seal after reclosing. Moreover, the open-close coating method precludes the possibility of using secondary cores or slides in the mold. The slide usually comes in at an angle to one of the dies, and thus cannot be used if the die moves relative to the substrate. Another major limitation of in-mold coating as presently practiced is that it is not readily applicable to injection or reaction injection molding processes. These types of molding processes do not use dies that normally have shear edge construction.

It would be highly desirable to eliminate the secondary opening and closing of the dies from an efficiency and flexibility point of view.

U.S. Patent 4,076,788 on which the preamble of claim 1 is based, discloses a method of compression molding a special purpose coating or skin onto the surface of a freshly molded polymeric substrate comprising three steps with respect to the positioning and pressurization of the dies. In the first step, the dies are closed and the substrate is nearly completely cured. Following that first step, the dies are in the second step more or less separated or opened, and the coating is injected. The partial opening of the dies which may lead to a gap prevents the coating from being forced over the surface of and compressing the substrate solely due to the coating injection step. The distribution over the substrate surface is then achieved in the third step by repressurising and reclosing the upper die. An unbiased study of the U.S. patent shows that the coating is injected in at relatively low pressures.

### SUMMARY OF THE INVENTION

The present invention relates to a method of molding and coating a substrate in a mold comprising:
- molding the substrate between at least two separable dies which form a mold cavity therebetween at a first mold cavity pressure and temperature in the mold cavity compatible with forming the substrate until it is partially cured
- injecting a coating into the mold cavity at a pressure substantially in excess of what the positive mold cavity pressure was immediately prior to injection while maintaining the dies in a pressurized state
- curing the coated, formed substrate;
characterized in that
- curing of the substrate before injection of the coating is carried out under pressure to a degree where its surface has formed a skin which is receptive to the coating
- the coating is injected at a pressure in excess of the curing pressure while the dies are maintained in a closed pressurized position without substantial retraction of the dies whereby the coating is forced over substantially the entire surface of and compresses the substrate.

This invention includes the process of molding parts and coating them in the mold. It includes forming a substrate in any mold having at least two separable parts and at least partially curing it to the degree that it has a surface receptive to a coating. The coating is injected into the mold at a high pressure without reopening or reclosing the mold. The coated part is subsequently cured and removed.

The elimination of the steps of opening and closing the dies by injecting coating at high pressures greatly increases the efficiency of the process, makes it more reliable, allows the use of secondary cores and slides, and probably makes it applicable to many forms of molding.

The time for compression molding a part varies widely with its size and shape. Larger, more complex parts naturally take more time. However, for any given part, it is estimated that the elimination of the opening and closing of the dies and the associated steps will save from 5 to 20 percent of the total molding and coating time. This saving translates to obtaining about the same percentage increase in productivity from existing capital equipment. For capital equipment for which costs often run into the millions of dollars for a single facility, the extra productivity is highly significant.

The reliability of in-mold coating to produce consistent, uniform products is also enhanced by this process. All the defects to the part and coating resulting from the reopening and reclosing of the dies are eliminated. Shear edge flash contamination, distortion, loss of the proper seal, and loss of parallelism are all undesirable frequent occurrences when the mold is opened and closed during the injection of the coating.

This improved method of molding and coating products has broader application than the previous methods. Since the mold is not reopened, cores or slides in the die may be used to create different shapes or openings in the part. These items previously had to be done with a secondary operation. Since the present coating process does not include opening the mold during the curing process, it would appear to be useful in injection molding. The same could be said of reaction injection molding and other types.

The high pressure injection also appears to coat more uniformly than low pressure injection. Moreover, the use of mechanisms to ensure parallelism of the dies does not appear to be necessary for this coating process, although it may still be necessary to ensure even flow of the substrate in the die cavity.

### BRIEF DESCRIPTION OF THE DRAWINGS

FIG. 1 is a schematic representation of the compression mold and injection means; and
FIGS. 2-6 illustrate a process of compression molding utilizing in-mold coating.

### DETAILED DESCRIPTION OF THE DRAWINGS

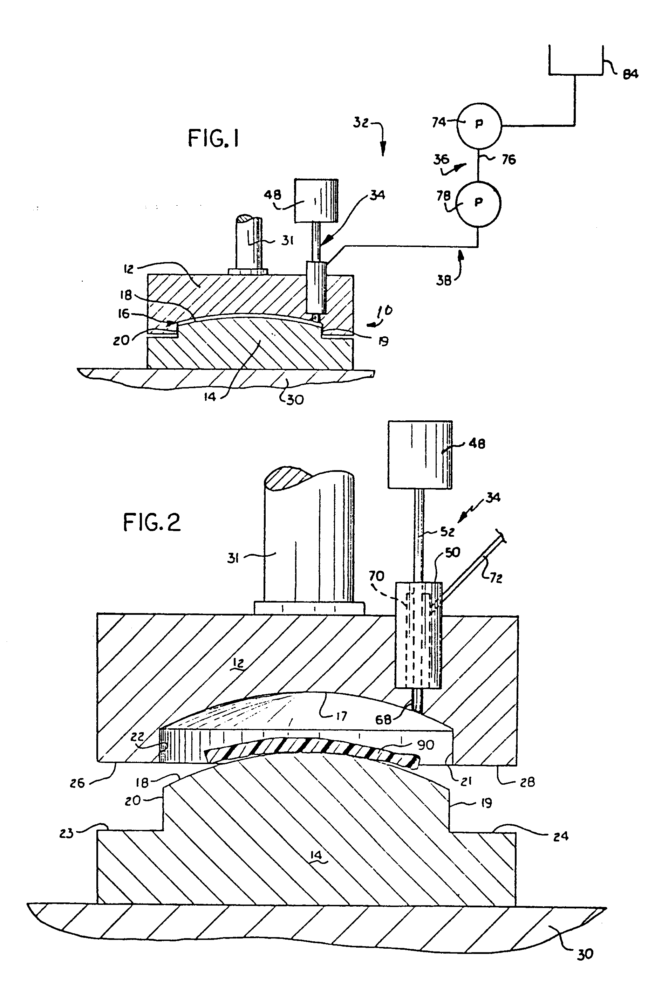

The general system of the process of this invention is illustrated in FIG. 1. It includes a mold 10 made up of dies 12,14 which are generally nested in the sense that they form a mold cavity 16 therebetween and have complementary surfaces 17 and 18. The concave surface 17 forms the bottom of the die or cavity 12. The convex surface 18 forms the upper surface of the lower die 14, also frequently called the "core." "

As illustrated in more detail in FIGS 2 through 6, the shear edges 19 and 20 on the die 14 and 21 and 22 on the die 12 are dimensioned to closely interfit with a very small dimensional difference. It is important that the shear edges in compression molding are very accurately dimensioned, since the substrate used in the molds goes into the shear edges and, when it begins to cure, acts as a seal.

Horizontal surfaces 23,24 on the lower die 14 interfit with complementary surfaces 26 and 28 on the upper die 12. At times, spacers or stops are used between the dies to ensure parallelism. The lower die 14 sits on a press bed 30 and the upper die 12 is motivated downwardly by a press ram 31. Cylinders or other means for separating the dies are also built into such machines, but are not shown.

An injection means, generally shown as 32, includes an injector 34, pump means 36, and appropriate conduit system 38. The injector 34 as particularly shown in FIGS. 2 through 6 includes an actuator 48 of any known type, such as hydraulic or electric. An injector housing 50 surrounds a pin 52 which passes therethrough and is operatively connected to the actuator 48. An example of such an injector is Model No. MRF 600-625-250, manufactured by The Morrell Co., Inc.. A chamber 70 in the housing 50 connects a bore 68 in the die 12 with a conduit 72 leading to the pump means 36. Conduit 72 is part of the conduit system 38.

The chamber 70 is generally complementary with the shape of the pin 52, and has appropriate seals between it and the pin 52 to ensure fluidtight operation. Conduit 38 would normally include the fittings, hoses, tubes, pipes, etc. which are necessary in this type of process. In this particular embodiment, the connectors, fittings, and conduits should have an operating pressure substantially in excess of the pressures generated by the pump of the coating. In this particular embodiment, it may mean operating pressures of 345 or 414 bar (5000 or 6000 psi), or even higher.

The pump means 36 includes a first high pressure pump 74. Any type of high pressure pump for coating means will be applicable, and a typical commercially available one would be the Model No. 206-445, manufactured by Graco Co. The output of the pump 74 goes through a conduit 76 and to a second high pressure pump, or metering pump, which steps up the pressure of the coating. The coating may be a one-component system as illustrated in FIG. 1, or a two or more component system. This invention is not limited to any particular type of coating or coating system. The second high pressure metering pump may be of any commercially available type, such as Model No. 851002000, manufactured by The Morrell Company, Inc.

One example of coatings that has been found successful is a molding coating manufactured by The Sherwin-Williams Company and known as Glas-Clad E67 BC 10. The general type of coating utilized in the present process is illustrated in U.S. patent No. 4,293,659 to Svoboda, the disclosure of which is incorporated herein by reference.

The coatings which are useful in the in-mold coating process of this invention include any coating which could be polymerized and/or cross-linked within the mold. These coatings typically are cured or polymerized by free radical and/or condensation polymerization methods and can include both single-component and two-component coatings, as are well-known in the art. Representative coatings include acrylic and acrylic ester polymers, saturated and unsaturated polyesters, epoxy esters, active hydrogen containing resins cross-linkable by blocked or free isocyanates and others. If a two-component resin system is used, the components are mixed, typically by a static mixer such as that made by Kenics Corporation, immediately prior to injection into the mold.

The cure time required for the coatings should be slow enough to allow the coatings to flow over the molded part in the mold prior to excessive gellation, but short enough to allow substantial curing within the molding cycle. Typically, cure times will run from about 15 to about 100 seconds at mold temperatures of about 149^{o}C (300^{o}F).

In addition to the polymerizable components, the in-mold coatings may also contain pigments, conductive materials such as carbon black, mold release agents such as dialkyl phosphates, initiators, catalysts, accelerators, flow agents, thickeners and other additives.

Representative one-component in-mold coatings typical of those useful in this invention include those taught in U.S. patents 4,235,833 and 4,239,808 (free radical polymerizable vinyl ester resin/polyvinyl acetate/styrene); U.S. patents 4,293,659 and 4,366,109 (polymerizable blocked isocyanate/ethylenically unsaturated polymer/ethylenically unsaturated monomer); U.S. patent 4,414,173 (polymerizable epoxy-based oligomer/copolymerizable monomer; copolymerizable monoethylenically unsaturated compound/polyvinyl acetate); U.S. patent 4,422,996 (unsaturated monomer solution of a polyurethane polyacrylate and a copolymerizable ethylenically unsaturated monomar solution of an acrylic or methacrylic ester of a diepoxide); and U.S. patent 4,477,405 (an ethylenically unsaturated monmomer dispersion of a polymerizable ethylenically unsaturated urea-urethane polymer).

Representative two-component coating systems include the coatings taught in U.S. patent 4,081,578 (polyisocyanate/active hydrogen containing resin); and U.S. patent 4,189,517 (diisocyanate/unsaturated polyester/saturated polyester diol flexibilizer/cross-linking polygol). The teaching of coating materials useful in in-mold coating in all of these patents is hereby incorporated by reference.

The coating is added to the mold in amounts sufficient to provide coverage of the plastic part to the desired film thickness. Typically, the coat will provide a final cure film thickness of at least 2.54 µm (0.1 mils) and could range up to a thickness of about 0.51 mm (20 mils). Typically, the film thicknesses range from about 25.4 µm (1.0) to about 0.254 mm (10 mils) of cured coating.

One process of this invention of molding and in-mold coating is illustrated in FIGS. 2 through 6. Initially the SMC charge 90 is placed on the lower die 14 when the dies are separated or the mold is open. In such position, the pin 52 blocks the bore 68 so that the coating cannot flow into the mold cavity 16. Although this process is described in terms of the sheet molding material, it should be understood that any type of material or form of material, such as bulk molding compound, or other plastics, may be utilized.

Any thermosetting or thermoplastic plastic substrate could be used in the practice of this invention. Representative examples of thermosetting plastics include the compression and injection molded plastics, such as unsaturated polyesters as in SMC, epoxies, phenolics, silicones, polyurethanes, etc. Representative examples of useful thermoplastic materials include polyethylene, ABS, PVC, polystyrene, polypropylene, acrylics, etc.

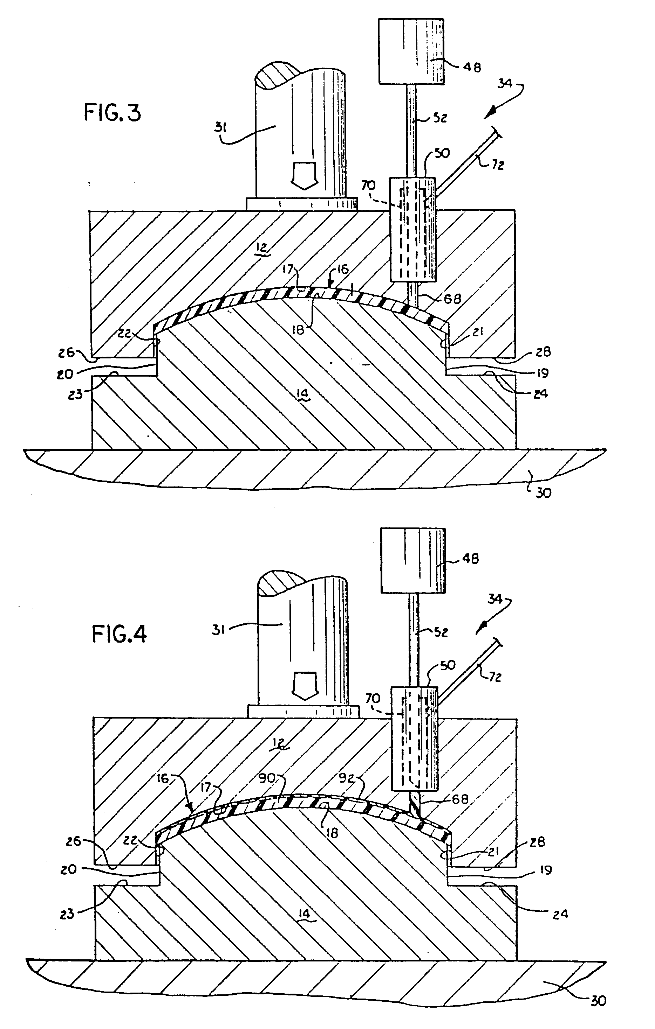

Subsequently, as shown in FIG. 3, the press ram 31 compresses the SMC 90 at a first mold cavity pressure and temperature which causes it to conform to the shape of the die cavity 16. As used herein, mold cavity pressure means the force exerted by the ram press divided by the top surface area of the formed substrate 96. In compression molding, this pressure would be in the area of 34.5 bar (500 psi) to 138 bar (2000 psi). At this point, the pin 52 blocks the coating from the injection system 36.

A sequentially timed actuator 48 or other type of actuator retracts the pin 52 in FIG. 4, allowing the coating at a substantially higher pressure than the mold cavity pressure to flow through the conduit 72, chamber 70, and bore 68, into the mold cavity 16. Substantially higher pressure means a pressure sufficient to overcome the mold cavity pressure to the point where the coating spreads over the surface of the substrate. In most instances, the pressure of the injected coating will be at least two times, and more often at least four times, the mold cavity pressure immediately prior to injection. Because of the very high pressure of the coating material, it coats, the substrate 90 evenly without retraction of the die 12. It is only necessary in the timing cycle that the substrate 90 be cured to the point where it has formed a skin and is thus receptive to a coating.

In a compression molding process, the substrate, polymers cross-link and shrink. As the substrate shrinks, the dies move toward each other to fill up the space. When the coating is subsequently injected at high pressures into the mold cavity 16, it acts to further compress the substrate 90. The addition of the coating at high pressure may also raise the die 12 slightly in spite of maintaining a ram pressure. Any movement of the dies, however, is ancillary to the injection of the coating and is not intentionally done and does not precede the step of the injection.

It is also important to note that the pressure is maintained in the mold cavity 16 prior to the injection of the coating. The actual mold cavity pressure prior to the injection may be the original molding pressure utilized to force the substrate into the proper form. Alternately, the pressure in the mold cavity immediately preceding the coating injection may be lower than the molding pressure. It is common in the molding industry to sometimes utilize a two-pressure molding technique. In this technique, the original high pressure is utilized to form the substrate and a subsequent lower pressure typically of about one-fourth to three-fourths of the forming pressure is used during the partial curing of the substrate. However, low pressure systems sometimes use pressures as low as 6.9-10.3 bar (100-150 psi).

Because the size and shape of the dies will dictate the pressure of the mold cavity and the pressure of the coating, no one particular set of values can be stated. However, in an example that has been utilized, an operating pressure of about 86.9 bar (1260 psi) in the mold cavity was utilized with a coating pressure of about 276 bar (4000 psi). In this example, it was not necessary to reduce the mold cavity pressure and the coating coated all of the desired surfaces of the substrate evenly at a uniform thickness of about 0.102 mm (4 mils).

The amount of coating injected into the mold can be controlled in any one of several known manners. For example, as shown in the above-noted Ditto patent, a predetermined amount of coating can be captured in a chamber and then released. Alternately, a timing mechanism can be used to meter the coating at a predetermined rate, and therefore a known volume, into the mold cavity.

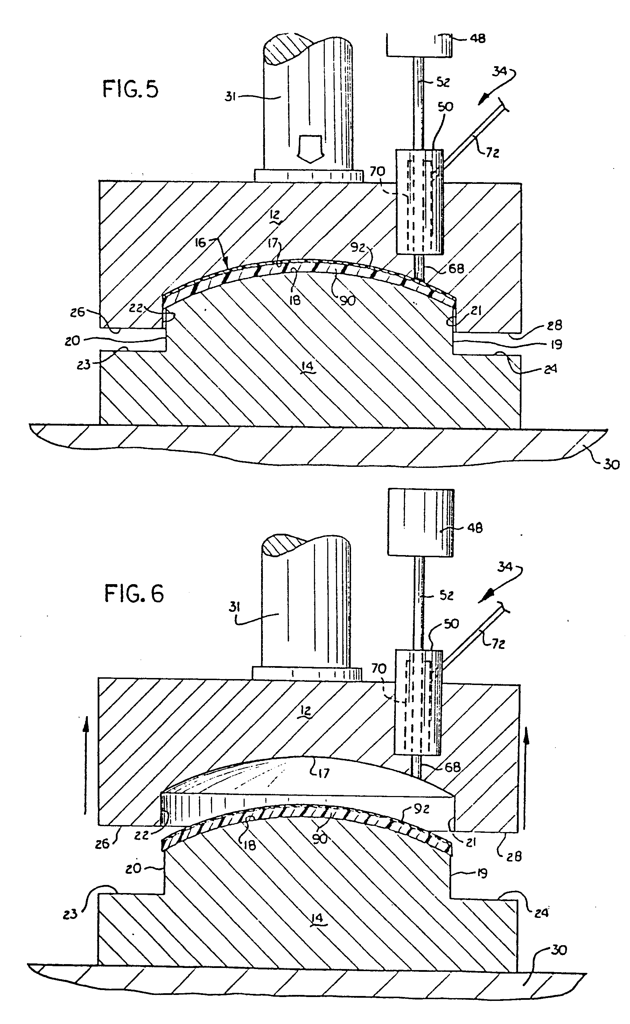

When the injection of the coating is complete, the pin 52 is moved downwardly, as shown in FIG. 5, by the actuator 48 to again block the opening to the bore 68. The coated, formed substrate is then maintained in the mold cavity for a period of time, depending on the size and shape of the article, until both the coating and the substrate are cured. When the molding process is complete, the dies are separated, usually by pistons (not shown), and the finished product is removed.

## Claims

1. A method of molding and coating a substrate (90) in a mold (10) comprising:
- molding the substrate (90) between at least two separable dies (12,14) which form a mold cavity (16) therebetween at a first mold cavity pressure and temperature in the mold cavity (16) compatible with forming the substrate (90) until it is partially cured
- injecting a coating into the mold cavity (16) at a pressure substantially in excess of what the positive mold cavity pressure was immediately prior to injection while maintaining the dies (12,14) in a pressurized state
- curing the coated, formed substrate (90);
characterized in that
- curing of the substrate (90) before injection of the coating is carried out under pressure to a degree where its surface has formed a skin which is receptive to the coating
- the coating is injected at a pressure in excess of the curing pressure while the dies (12,14) are maintained in a closed pressurized position without substantial retraction of the dies (12,14) whereby the coating is forced over substantially the entire surface of and compresses the substrate (90).

2. The process of claim 1, wherein the injection pressure of the coating is at least two times the pressure in the mold cavity (16) immediately before injection.

3. The process of claim 1, wherein the injection pressure of the coating is at least four times the pressure in the mold cavity (16) immediately before injection.

4. The process of claim 3, wherein the temperature of the molding process is between 37.8°C (100°F) and 204.5°C (400°F).

5. The process of claim 1, wherein the substrate (90) is a thermosetting substrate.

6. The process of claims 1, wherein the substrate (90) is a thermoplastic substrate.

7. The process of claim 1, 2 or 3, wherein the substrate (90) is cured to the point where sufficient shrinkage occurs to allow injection of the coating.

8. The process of claim 7, wherein the formed substrate (90) is partially cured at a second pressure which is less than the first pressure.

9. The process of claim 8, wherein the first pressure is betwen 34.5 and 138 bar (500 and 2000 psi).

10. The process of claim 9, wherein the second pressure is between 6.9 and 41.4 bar (100 and 600 psi).

11. The process of claim 7, wherein injecting the coating into the mold cavity (16) through the port includes positioning an injector pin (52) in a first position to block the port until the substrate (90) is at least partially cured;
moving the pin (52) to a second position so that the coating travels through the port and into the mold cavity (16);
moving the pin (52) back to the first position after a predetermined amount of coating sufficient to coat the desired surface of the substrate (90) has been injected.

12. The process of claim 11, wherein the amount of coating injected into the mold cavity (16) is determined by passing it through a metering pump (78).

13. The process of claim 12, wherein injecting the coating into the mold cavity (16) includes raising the pressure of the coating to a third pressure by means of a first pump (74), taking the output of the first pump (74) and raising the coating to a fourth pressure by means of a second pump (78) which acts to meter the coating.

14. The process of claim 7, wherein the first pressure is maintained in the mold cavity (16) until the injection of the coating has begun.

15. The process of claim 8, wherein the second pressure is maintained before the injection of the coating begins.

16. The process of claim 1 comprising the step of putting the substrate (90) into the mold cavity (16) under environmental conditions which cause the substrate (90) to take substantially the shape of the mold cavity (16).

17. The process of claim 16, wherein the substrate (90) is cured to the point where shrinkage occurs and the substrate is compressible by the coating injected under high pressure.

## Patentansprüche

1. Verfahren zum Formen und Überziehen eines Substrats (90) in einer Form (10) umfassend
- das Formen des Substrats (90) zwischen wenigstens zwei trennbaren Formwerkzeugen (12, 14), die dazwischen einen Formhohlraum (16) bilden, bei einem ersten Formhohlraumdruck und einer ersten Formhohlraumtemperatur in dem Formhohlraum (16), die mit dem Formen des Substrats (90) bis es teilweise gehärtet ist, vereinbar sind,
- das Einspritzen eines Überzugs in den Formhohlraum (16) bei einem Druck, der wesentlich über dem positiven Formhohlraumdruck liegt, der unmittelbar vor dem Einspritzen herrschte, während die Formwerkzeuge (12, 14) in einem unter Druck stehenden Zustand gehalten werden,
- das Härten des überzogenen, geformten Substrats (90);
dadurch gekennzeichnet, daß
- das Härten des Substrats (90) vor dem Einspritzen des Überzugs unter Druck bis zu einem Ausmaß durchgeführt wird, bei dem seine Oberfläche eine Haut gebildet hat, die für den Überzug aufnahmefähig ist,
- der Überzug bei einem Druck eingespritzt ist, der über dem Härtungsdruck liegt, während die Formwerkzeuge (12, 14) in einer geschlossenen, unter Druck stehenden Stellung gehalten werden, ohne wesentliches Zurückziehen der Formwerkzeuge (12, 14), wodurch der Überzug über im wesentlichen die ganze Oberfläche des Substrats (90) gezwungen wird und dieses komprimiert.

2. Verfahren nach Anspruch 1, bei welchem der Einspritzdruck des Überzugs wenigstens das Zweifache des Druckes im Formhohlraum (16) unmittelbar vor dem Einspritzen beträgt.

3. Verfahren nach Anspruch 1, bei welchem der Einspritzdruck des Überzugs wenigstens das Vierfache des Druckes im Formhohlraum (16) unmittelbar vor dem Einspritzen beträgt.

4. Verfahren nach Anspruch 3, bei welchem die Temperatur des Formprozesses zwischen 37,8°C (100°F) und 204,5°C (400°F) liegt.

5. Verfahren nach Anspruch 1, bei welchem das Substrat (90) ein wärmehärtbares Substrat ist.

6. Verfahren nach Anspruch 1, bei welchem das Substrat (90) ein thermoplastisches Substrat ist.

7. Verfahren nach Anspruch 1, 2 oder 3, bei welchem das Substrat (90) bis zu dem Punkt gehärtet wird, bei dem ausreichende Schrumpfung auftritt, um den Überzug einspritzen zu können.

8. Verfahren nach Anspruch 7, bei welchem das geformte Substrat (90) bei einem zweiten Druck teilweise gehärtet wird, der geringer ist als der erste Druck.

9. Verfahren nach Anspruch 8, bei welchem der erste Druck zwischen 34,5 und 138 bar (500 und 2000 psi) liegt.

10. Verfahren nach Anspruch 9, bei welchem der zweite Druck zwischen 6,9 und 41,4 bar (100 und 600 psi) liegt.

11. Verfahren nach Anspruch 7, bei welchem das Einspritzen des Überzugs in den Formhohlraum (16) durch die Einlaßöffnung umfaßt
die Positionierung eines Einspritzstiftes (52) in eine erste Stellung, um die Einlaßöffnung zu blockieren, bis das Substrat (90) wenigstens teilweise gehärtet ist; das Verschieben des Stiftes (52) in eine zweite Stellung, so daß der Überzug durch die Einlaßöffnung und in den Formhohlraum (16) fließt;
das Zurückschieben des Stiftes (52) in die erste Stellung, nachdem eine vorher bestimmte Menge an Überzug eingespritzt worden ist, welche ausreicht, um die gewünschte Oberfläche des Substrats (90) zu überziehen.

12. Verfahren nach Anspruch 11, bei welchem die Menge an in den Formhohlraum (16) eingespritztem Überzug dadurch bestimmt wird, daß er durch eine Dosierungspumpe (78) geführt wird.

13. Verfahren nach Anspruch 12, bei welchem das Einspritzen des Überzugs in den Formhohlraum (16) umfaßt
das Anheben des Druckes des Überzugs auf einen dritten Druck mit Hilfe einer ersten Pumpe (74),
die Übernahme des Ausstoßes der ersten Pumpe (74), und das Anheben des Überzuges auf einen vierten Druck mit Hilfe einer zweiten Pumpe (78), die zur Dosierung des Überzuges dient.

14. Verfahren nach Anspruch 7, bei welchem der erste Druck in dem Formhohlraum (16) aufrechterhalten wird, bis das Einspritzen des Überzuges begonnen hat.

15. Verfahren nach Anspruch 8, bei welchem der zweite Druck aufrechterhalten wird, bevor das Einspritzen des Überzuges beginnt.

16. Verfahren nach Anspruch 1, umfassend den Schritt des Einführens des Substrates (90) in den Formhohlraum (16) unter Umgebungsbedingungen, die dazu führen, daß das Substrat (90) im wesentlichen die Gestalt des Formhohlraums (16) annimmt.

17. Verfahren nach Anspruch 16, bei welchem das Substrat (90) bis zu dem Punkt gehärtet wird, bei dem Schrumpfung auftritt und das Substrat durch den unter hohem Druck eingespritzten Überzug komprimierbar ist.

## Revendications

1. Un procédé de moulage et de revêtement d'un substrat (90) dans un moule (10), comprenant les étapes consistant à :
- mouler le substrat (90) entre au moins deux matrices séparables (12, 14) qui forment une cavité de moule (16) entre elles en exerçant dans la cavité de moule (16) une première pression et une première température compatibles avec le moulage du substrat (90) jusqu'à ce qu'il soit partiellement durci,
- injecter une matière de revêtement dans la cavité de moule (16) à une pression sensiblement supérieure à la valeur qu'avait la pression positive dans la cavité de moule immédiatement avant l'injection tout en maintenant les matrices (12, 14) dans un état pressurisé,
- assurer le durcissement du substrat moulé et revêtu (90);
procédé caractérisé en ce que :
- un durcissement du substrat (90) avant injection du revêtement est effectué sous pression jusqu'à un degré où sa surface a formé une peau pouvant recevoir le revêtement ;
- le revêtement est injecté sous une pression supérieure à la pression de durcissement pendant que les matrices (12, 14) sont maintenues dans une position de fermeture sous pression sans rétraction substantielle des matrices (12, 14) de telle sorte que le revêtement soit refoulé pratiquement sur toute la surface du substrat (90) et comprime ce dernier.

2. Le procédé selon la revendication 1, dans lequel la pression d'injection du revêtement est au moins égale à deux fois la pression dans la cavité de moule (16) immédiatement avant injection.

3. Le procédé selon la revendication 1, dans lequel la pression d'injection du revêtement est égale à au moins quatre fois la pression dans la cavité de moule (16) immédiatement avant injection.

4. Le procédé selon la revendication 3, dans lequel la température dans le processus de moulage est comprise entre 37,8°C (100°F) et 204,5°C (400°F).

5. Le procédé selon la revendication 1, dans lequel le substrat (90) est un substrat thermodurcissable.

6. Le procédé selon la revendication 1, dans lequel le substrat (90) est un substrat thermoplastique.

7. Le procédé selon la revendication 1, 2 ou 3, dans lequel le substrat (90) est durci jusqu'au point où un retrait suffisant se produit pour permettre une injection de revêtement.

8. Le procédé selon la revendication 7, dans lequel le substrat formé (90) est partiellement durci a une seconde pression qui est inférieure à la première pression.

9. Le procédé selon la revendication 8, dans lequel la première pression est comprise entre 34,5 et 138 x10⁵ Pa (500 et 2000 psi).

10. Le procédé selon la revendication 9, dans lequel la seconde pression est comprise entre 6,9 et 41,4 x10⁵ Pa (100 et 600 psi).

11. Le procédé selon la revendication 7, dans lequel l'injection du revêtement dans la cavité de moulage (16) par l'intermédiaire du conduit d'accès consiste à positionner une broche d'injecteur (52) dans une première position pour fermer le conduit d'accès jusqu'à ce que le substrat (90) soit au moins partiellement durci ;
- déplacer la broche (52) jusque dans une seconde position de telle sorte que le revêtement progresse à travers le conduit d'accès et jusque dans la cavité de moule (16);
- déplacer la broche (52) vers l'arrière jusque dans la première position après qu'une quantité prédéterminée de revêtement suffisante pour recouvrir la surface désirée du substrat (90) a été injectée.

12. Le procédé selon la revendication 11, dans lequel la quantité de revêtement injectée dans la cavité de moule (16) est déterminée en le faisant passer dans une pompe de dosage (78).

13. Le procédé selon la revendication 12, dans lequel l'injection du revêtement dans la cavité de moule (16) consiste à augmenter la pression du revêtement jusqu'à une troisième pression au moyen d'une première pompe (74), à faire sortir la matière de revêtement de la première pompe (74) et à augmenter la pression de la matière de revêtement jusqu'à une quatrième pression au moyen d'une seconde pompe (78) qui agit de façon à doser le revêtement.

14. Le procédé selon la revendication 7, dans lequel la première pression est maintenue dans la cavité de moule (16) jusqu'à ce que l'injection de la matière de revêtement ait commence.

15. Le procédé selon la revendication 8, dans lequel la seconde pression est maintenue avant que l'injection de la matière de revêtement commence.

16. Le procédé selon la revendication 1, comprenant l'étape consistant à introduire le substrat (90) dans la cavité de moule (16) dans des conditions d'environnement qui font en sorte que le substrat (90) prenne dans l'essentiel la forme de la cavité de moule (16).

17. Le procédé selon la revendication 16, dans lequel le sustrat (90) est durci jusqu'au point où un retrait se produit et le substrat peut être comprimé par le revêtement injecté sous une pression élevée.
